Europäisches Patentamt

**European Patent Office**

**Office européen des brevets**

(11) Publication number: **0 134 321**

**A1**

(12)

# EUROPEAN PATENT APPLICATION

(21) Application number: **83304651.9**

(51) Int. Cl.⁴: **G 01 N 21/55**

(22) Date of filing: **11.08.83**

(43) Date of publication of application:
**20.03.85 Bulletin 85/12**

(84) Designated Contracting States:
**BE DE FR GB IT LU NL**

(71) Applicant: **Van den Bosch, Francois J.G.**
**10209 Eisenhower Lane**
**Great Falls Virginia 22066(US)**

(72) Inventor: **Van den Bosch, Francois J.G.**
**10209 Eisenhower Lane**
**Great Falls Virginia 22066(US)**

(74) Representative: **Crawford, Andrew Birkby et al,**
**A.A. THORNTON & CO. Northumberland House 303-306**
**High Holborn**
**London WC1V 7LE(GB)**

(54) **Non-invasive reflectance spectrophotometrics apparatus.**

(57) Spectrophotometric apparatus is incorporated in a portable housing (100) with a light source (102) for emitting a wide band of radiation. A photosensitive detector (112) is responsive to the monochromatic light derived from a specimen located outside the housing (100) and passed through filter system (110) to provide output signals representative of the spectrophotometric characteristics of the specimen. In one embodiment, a calibration rod (104) is mounted to the apparatus and extends from the housing (100) with an end portion (106) thereof retaining a substance having a known spectrophotometric characteristic for calibrating the photosensitive detector (112).

FIG. 9a.

- 1 -

Non-Invasive Reflectance
Spectrophotometric Apparatus

The present invention relates to spectrophotometric or densitometer apparatus, and in particular to
such apparatus that is portable and adapted to be
calibrated by a substance having selective absorption
characteristics over a relatively narrow bandwidth and
in which the specimen is irradiated with white light
or a relatively wide band of radiation such that reflected
radiation from the specimen can be detected by suitable
sensor apparatus.

Spectrophotometric apparatus generally utilize
absorption filter devices to select and detect the
necessary information to identify the elements or components of a given specimen. Selective absorption is
generally achieved with the use of colour filters,
interference filters, echelon gratings or prisms. In
particular, the information obtained from spectrophotometer instruments is produced by passing a light beam,
such as is obtained from a monochromatic light source,
or simply by means of coloured filters, through suitably
placed glass transparent recipients in the path of the
light beam. The loss of the light by absorption, for
example, in the specimen or object is then interpreted
in terms of the resultant optical density or induction
of the chemical composition of the specimen, or a
combination of both optical density and chemical techniques.

The present invention represents a distinct departure from the aforementioned classical concepts of spectrophotometric analysis. In accordance with the invention, the spectrophotometric information or data is obtained by reflecting radiation from a suitable broad band or a narrow band light source, such as monochromatic light source, or the use of coloured filters, interference filters, echelon gratings or prisms, etc., and collecting the light reflected from a specimen or object by a suitable photosensor, such as a photocell or photomultiplier. The necessary absorption filters, or narrow band radiation-producing elements are then inserted in the reflected light path between the specimen and the photosensitive device.

In a modified embodiment of the invention, the specimen or object is illuminated with a wide band light source, such as a projection lamp with a colour temperature of over 3,000 degrees, or a Xenon high pressure arc lamp, with the departure from the classical concept or technique again being the insertion of a required absorption filter in front of the photoelectric sensor or receiver. Alternatively, a dispersive element such as a grating may be placed in front of the photosensitive device, thereby selecting the precise wavelength at which the absorption occurs.

The advantages of such a technique over the classical photometer, spectrophotometer or colorimeter, is simply that the specimen or object to be examined is irradiated with a higher intensity irradiation than if the light radiation were, for example, monochromatic by the placement or insertion of the filters between the light source and the specimen as opposed to the insertion of the absorption filter between the reflected light rays from the object and the photosensitive element or receiver. Thus, in accordance with the present invention, the photoelectric response is greatly increased and obtained with more precision.

In an exemplary embodiment of the invention, coloured glass filters, or gelatin filters, may be employed to achieve narrow band monochromatic light radiation.

In one embodiment of photoelectric-type spectrophotometer or colorimeter apparatus as disclosed hereinafter, a calibrating rod extends from the housing of the instrument in such a manner that light from a light source within the housing can be reflected from a calibrating material enclosed in the end portion of the calibration rod and reflected upon a photosensor for the purposes of calibrating the instrument. The calibrating rod which can be used to calibrate, for example, a differential bridge which utilizes a pair of photosensitive elements in opposite arms thereof along with the necessary adjusting resistors so as to calibrate the spectrophotometric apparatus. Preferably, the calibrating rod extends from the front of the instrument such that the tip thereof containing a calibrating specimen or material is aligned with an aperture in the front of the apparatus from which the light radiation is emitted and reflected from the specimen to another aperture through which the reflected light passes and is intercepted by the required absorption filter and is then sensed by a photosensitive element or device.

In another embodiment, the calibration rod is replaced by a hood containing an aperture through which light emitted from the light source within the housing passes and is reflected from either a specimen or a calibrating material positioned in front of the aperture.

In this embodiment, the aperture with a hood is mounted to the apparatus such that the light emitted from the light source within the housing thereof will pass through the aperture and be reflected from either a specimen or calibration material positioned in front of the aperture on to the photodetective device within the housing. This enables the operator of the apparatus to readily hand-position a multitude of diverse calibrating materials, individually one at a time, in front of the aperture such that the apparatus can be calibrated over a very wide spectrum. Also, a multitude of diverse specimens can be spectroscopically analyzed subsequent to a calibration of the instrument merely by placing the specimen in front of the aperture such that the light is reflected to the photosensitive device within the housing. The hood provides sufficient screening of extraneous light such that the light reflected on to the photosensitive device is essentially characterized by either the specimen or calibration material.

In accordance with the various embodiments of the invention, a portable spectrophotometric apparatus is provided which enables information or data identifying a specimen or object to be very rapidly determined with significant precision.

Filter wheels, with or without slit devices may be used to provide a rapid succession of electrical signals in a pulse frame, which when integrated results in a very specific absorption characteristic to identify the specimen or object, or elements therein. Such filter wheels can provide the necessary pulse input for computer applications in a very simple portable spectrophotometric apparatus that is extremely efficient and enables rapid spectrophotometric analysis.

However, one of the significant advantages is the utilization of an ordinary voltage or ammeter as an indicator which can be calibrated by a calibrating substance positioned in front of the aforementioned aperture. This enables calibration of the instrument over a wide band width of radiation.

A further advantage is that the reflected radiation emanating from the object or specimen is enhanced such that the photosensitive response is greatly increased thereby enabling improved precision measurements to be made from portable spectrophotometric or densitometer apparatus.

A further advantage is that a portable spectrophotometric or densitometer apparatus may be very simply constructed which is less costly than presently known apparatus but which is extremely efficient and enables rapid spectrophotometric analysis to be carried out.

Further, the apparatus is capable of being utilized by relatively unskilled technicians, but yet is sufficiently accurate to afford wide application, especially in the medical field since it can be readily calibrated over a wide band-width of radiation.

In order that the present invention be more readily understood, embodiments thereof will now be described by way of example with reference to the accompanying drawings, in which:-

Figure 1 represents a basic form of spectrophotometric apparatus;

Figure 2 represents an embodiment of the invention in which all the essential components of the spectrophotometric apparatus are contained in a single housing;

Figure 3 represents a modified embodiment of the invention similar to the first embodiment of Figure 1 but using three different absorption filters and a single photosensitive device;

Figures 4 to 6 each respectively represent the spectral responses of a cyan dichroic filter, a yellow dichroic filter, and a magenta dichroic filter for obtaining a narrow band width of a 100 to 200 Angstroms at different portions of the light spectrum;

Figure 7 represents another embodiment of the invention similar to the embodiment of Figure 2 but utilizing optical filters with the essential components of the portable spectrophotometric apparatus contained in a single housing;

Figure 8 illustrates a series of absorption curves obtained from a glass filter which, when used in combination, provide a narrow band light output;

Figure 9a is a side view of a further embodiment of a portable spectrophotometric apparatus in accordance with the invention in which a calibration rod is fastened to the apparatus and extends in front of a light source and photo sensor;

Figures 9b and c illustrate perspective front and rear views of the spectrophotometric apparatus of Figure 9a;

Figure 10 is a side view of a preferred embodiment of a portable spectrophotometric apparatus in accordance with a further embodiment of the invention;

Figure 11 illustrates a perspective front and rear view of the spectrophotometric apparatus of Figure 10, and

Figure 12 is a schematic of the measuring circuit.

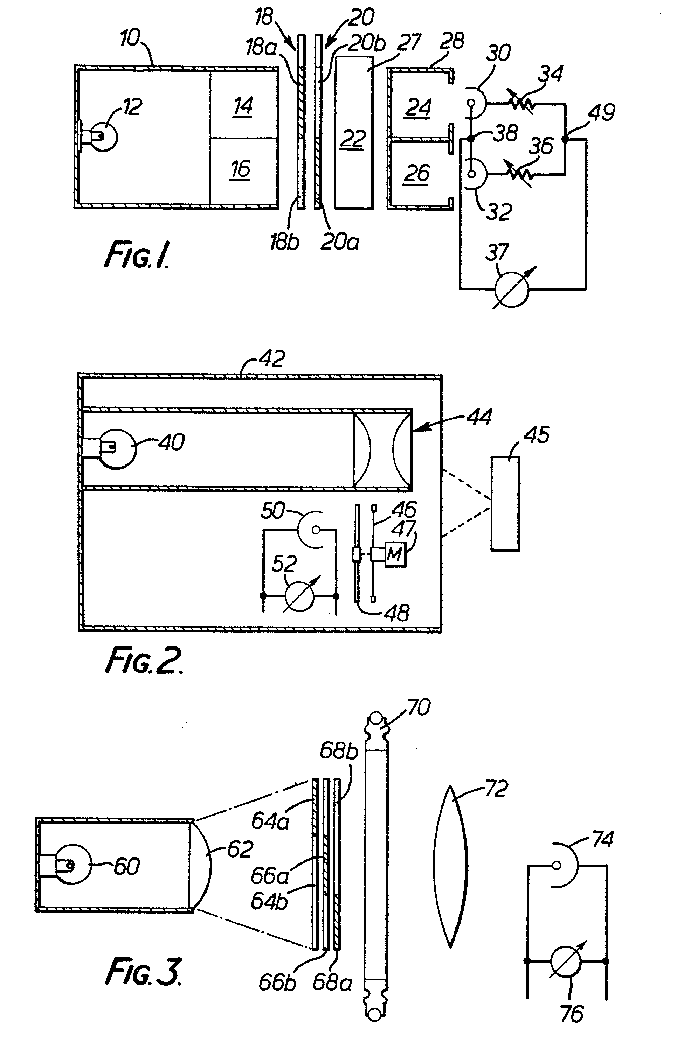

A basic form of spectrophotometric apparatus is shown in Figure 1, in which a light housing 10 includes a suitable wideband light source 12 which radiates light through separate light channels 14 and 16 on to filters 18 and 20. Filters 18 and 20 can be coloured glass filters, or simply gelatin filters, each respectively including a portion 18a and 20a for producing different respective narrow band monochromatic light output in response to the light radiation from light source 12 through channels 14 and 16. The monochromatic light emanating from monochromatic filter portion 18a passes through transparent portion 20b in filter 20, and the light from light source 12 passing through channel 16 passes through transparent portion 18b and filter 18 and on to monochromatic filter portion 20a, with the light output thereof, along with the light output of monochromatic filter 18a, being transmitted to a specimen (not shown) within specimen cuvette 22. The light passing through or reflected by the specimen is then transmitted through channels 24 and 26 in photosensor housing 28 and respectively received by photosensors 30, 32. The respective outputs of photosensors 30 and 32 is passed through resistors 34, 36, each of which are in respective arms of a differential detector bridge arrangement along with an associated one of the photosensors 30, 32. A measuring instrument, such as 37, is connected across the differential bridge detector between nodes 38 and node 40. The differential bridge arrangement illustrated in Figure 1 may be calibrated in a known manner by adjusting resistors 34 and 36 until a null is obtained with a calibration specimen within specimen cuvette 27.

Light housing 10, photosensor housing 28, along with photosensors 30 and 32 and the associated differential bridge and measuring circuitry, may be mounted in one housing that is portable with space for the insertion of filters 18 and 20 as well as specimen cuvette 27.

Figure 2 represents an embodiment of a portable spectrophotometric or colorimeter apparatus in accordance with the present invention in which the radiation source, optics, filter and photosensitive apparatus are all mounted within a single housing with the light reflected from a specimen outside the light housing and on to a rotatable scanning wheel with a slit such that the reflected light from the specimen passing through the slit on to the circular filter and the light emanating from the circular filter is sensed by a suitable photosensor device. Specifically, lamp 40 is mounted at one end of housing 42 and may comprise a known Xenon lamp providing a relatively wide band or white source of light which is projected by an optical arrangement 44 through an aperture at the opposite end of housing 42 so as to be reflected on to specimen 45 outside of the portable housing 42. The light reflected from specimen 45 passes through another aperture in housing 42 so as to impinge upon the upper portion of scanning wheel 46, which is provided with a suitable slit (not shown). A stepping motor 47 or other drive arrangement known to the art is used to rotate scanning wheel 46.

In a known manner, circular filter wheel 48 is mounted in parallel spaced relation to scanning wheel 46 such that, with the rotation of the scanning wheel and the slit provided therein, the reflected light from specimen 45 impinges on circular filter 48. The filter output of filter output 48 then impinges on photosensitive device 50 and the output thereof is sensed by a measuring instrument 52, the scale of which is observable by the operator through a suitable opening in housing 42, or by mounting the measuring indicator 52 on the outside of the housing.

The spectrophotographic or colorimeter apparatus of Figure 2 has the distinct advantage over known prior art apparatus in that the filter is positioned between the photosensitive device and the specimen such that the light reflected from the specimen is utilized to determine the spectrophotometric characteristics thereof as opposed to positioning the filter between the light source and the specimen. In accordance with the embodiment of Figure 2, the light sensed by the photosensitive device 50 is enhanced as light impinging thereon is of greater intensity as it is not reduced by any monochromatic filter arrangement, for example, which is positioned between the light source and the specimen as in known spectrophotometric apparatus. Additionally, the use of stepping motor 47 to rotate scanning wheel 46 with the slit therein enables a pulse train output to be provided which is useful for digital type recording, processing, or indicator apparatus known to the art.

The embodiment of Figure 3 differs from that of Figure 1 primarily in that three absorption filters, each having different absorption bandwidths, are utilized along with a single photosensitive device as opposed to a dual photosensitive device arranged in a differential bridge detector as with the embodiment of Figure 1. As shown in Figure 3, light source 60 provides a relatively wide band of radiation output that is projected by a suitable optical arrangement (known to those skilled in the spectrophotometric art) on to cascaded filters 64, 66 and 68. Filters 64, 66 and 68 each contain a respective filter portion 64a, 66a and 68a, as well as a non-filter portion or area 64b, 66b and 68b, and aligned as shown in the Figure. This filter arrangement is similar to that described above with respect to the embodiment of Figure 1. The three different light outputs each respectively in a different region of, for example, the light spectrum, impinge upon a specimen mounted within specimen holder 70. The light transmitted through, or reflected from, the specimen is then projected by suitable optics 72 on to photosensitive device 74, the output of which is indicated by a suitable reading instrument, such as a calibrated ammeter 76.

The embodiment of Figure 3 demonstrates the use of a plurality of filters to provide a respective plurality of narrow band monochromatic light emission, thereby enabling the apparatus to cover a range of the light spectrum of interest with regard to the spectrophotometric characteristics of the specimen mounted on or within specimen holder 70.

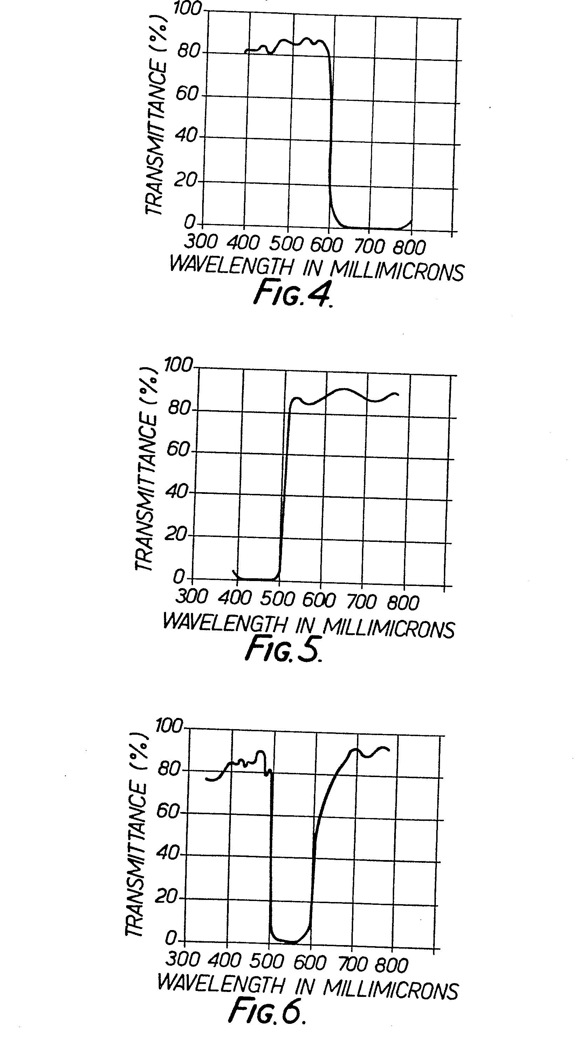

Figures 4 to 6 illustrate the transmittance characteristics of three respectively different exemplary monochromatic filters which can be used in any of the three embodiments represented by Figures 1 to 3 as described above. The cyan dichroic filter has the spectral response illustrated in Figure 4, having an approximately 90 percent transmittance characteristics at a wavelength of approximately 600 mu, with a relatively flat response from approximately 600 mu to 800 mu. The yellow dichroic filter has a spectral response illustrated in Figure 5 in which the transmittance is essentially zero between 400 and 500 mu and which increases to approximately 90 percent transmittance in wavelengths exceeding 500 mu. The spectral characteristics of a magenta dichroic filter are illustrated in Figure 6, showing a substantially constant transmittance up to a wavelength of 500 mu with a falloff to essentially a zero transmittance characteristic between 500 and 600 mu and a subsequent high transmittance above approximately 650 mu.

The dichroic filter responses illustrated in Figures 4 to 6 are merely exemplary, as those skilled in the art will recognize that filters having other spectral responses can also be utilized either singularly or in combination in any of the embodiments of Figures 1 to 3. For example, the filter wheel of the embodiment of Figure 2 can incorporate a great number of filter bands, each having a different transmittance characteristic such that the monochromatic light that is filtered by the filter extends over a wide range to increase the useful application to which the portable spectrophotometric or colorimeter apparatus of the invention can be utilized.

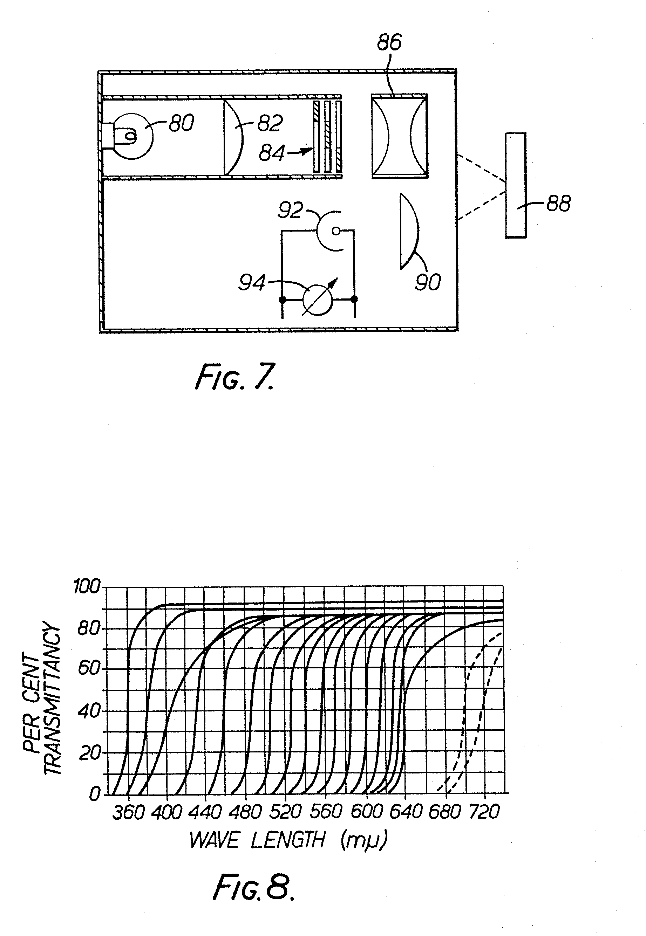

The embodiment of Figure 7 is similar to that of Figure 2 with the exception that the scanning wheel and circular filter arrangement of Figure 2 are replaced by an optical filter arrangement similar to that of the embodiment of Figure 3. In the embodiment of Figure 7, the radiant light output of light source 80 is projected by optics 82 on to a series of optical filters 84 mounted in spaced parallel relationship as illustrated in the Figure to provide a plurality (in this instance three) monochromatic light outputs which are then projected by lens system 86 on to specimen 88 outside housing 90 such that the light reflected from the specimen is transmitted through another optical arrangement 90 on to photosensitive device 92, the output of which is indicated by measuring instrument 94.

Figure 8 illustrates the transmittance characteristics of filter glasses with a wavelength extending from approximately 325 mu to 720 mu. The glass filters having the transmittance characteristics illustrated in Figure 8 can be formed, for example, on a circular filter wheel, such as that illustrated and described in the embodiment of Figure 2, to produce a monochromatic light transmission characteristics, can be obtained over a relatively wide wavelength.

The embodiment of a spectrophotometric or colorimetric apparatus as illustrated in Figures 9a to 9c represents a practical commercial adaptation of a portable, easily calibrated, and yet fairly accurate, spectrophotometric or colorimeter apparatus in accordance with the principles of the invention. As illustrated in Figure 9a, housing 100 includes a light source having wide band output characteristics and is mounted such that the light radiating therefrom is transmitted through an aperture at the opposite end of the housing. Closely adjacent light source 102 is mounted calibration rod 104, the end portion 106 of which is adapted to receive a substance having a known reflectance, transmittance or spectrophotometric characteristic. The light emanating from light source 102 is reflected from the end portion 106 of calibration rod 104 through another aperture 108 in housing 100 and on to a monochromatic filter system 110. The light transmitted through filter system 110 is then received by photosensor 112 with the output thereof being indicated by indicating meter 114 mounted on sloping front surface 116 of housing 100. Housing 100 may also include a power supply and any other electronics that are necessary to respectively power the detection circuitry and to provide a suitable output, for example, to a computer. Such electronics may include amplifiers, frequency discriminator networks, and electrical frequency filters.

The portable spectrophotometric or colorimeter apparatus of the embodiment in Figure 9a operates by the operator holding the specimen in front of light source 102 and aperture 108 such that light reflected from the specimen enters aperture 108 and impinges on monochromatic filter system 110. If desirable, a removable bracket may be mounted on housing 100 to hold the specimen in a suitable position. The specimen and specimen holder then can be removed in order to calibrate the spectrophotometric apparatus with the calibration material mounted at portion 106 of calibration rod 104. The spectrophotometric or colorimeter apparatus of Figure 9a, in addition to being portable, provides a simple and inexpensive means for readily determining the spectrophotometric characteristics of any number of specimens and is useful in laboratories and medical facilities, such as hospitals in which it may be desirable to quickly determine the content of a blood sample, for example. Such an instrument can be carried by a medical team in an ambulance.

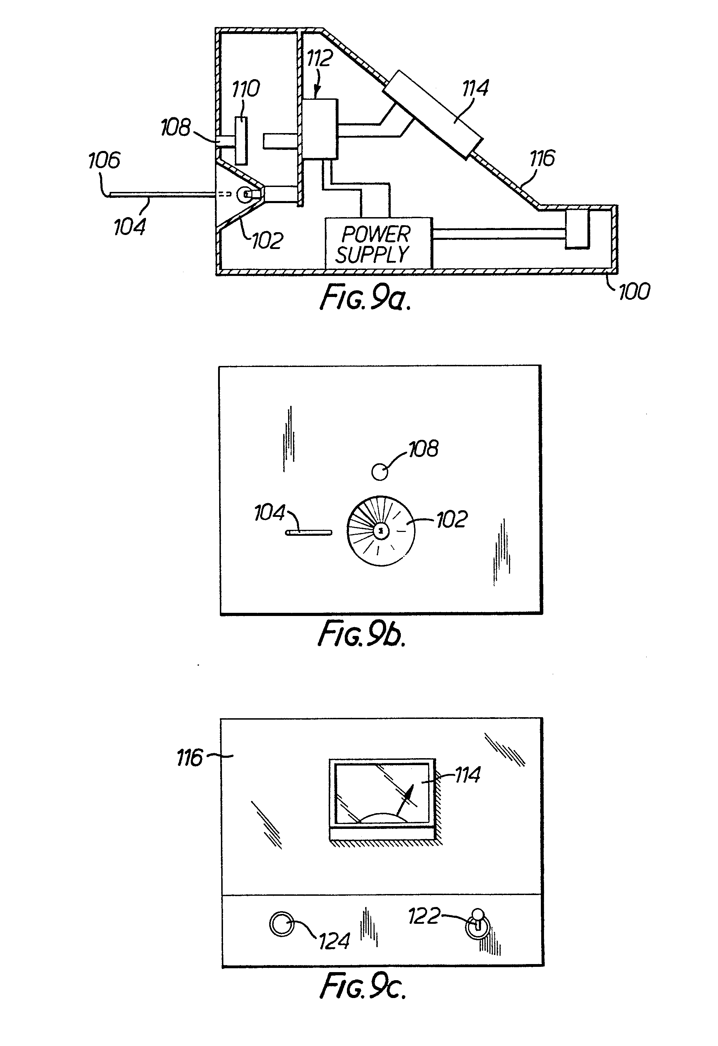

Figure 9b represents a rear view of the photometric apparatus of Figure 9a illustrating the relative positioning of calibration rod 104 and aperture 120 through which the light reflected from a specimen held in front of lamp 102 enters the apparatus for determination of the spectrophotometric characteristics of the specimen. Figure 9c
illustrates a front view of the spectrophotometric or
colorimeter apparatus of the embodiment of Figure 9a
indicating the relative position of indicator meter 114 on
sloping face 116 of housing 100. On/off switch 122, as
well as pilot light 124 may be provided at any convenient
location on the exterior of the apparatus.

In the embodiment of Figures 9a to 9c, calibration
rod 104 is mounted on the rear surface of housing 100
such that end portion 106 thereof is positioned to reflect
light from light source 102 through aperture 108 and also
in a manner so as not to interfere with the holding of a
specimen in front of light source 102 and aperture 108
such that light can be reflected from the specimen on to
monochromatic filter system 110.

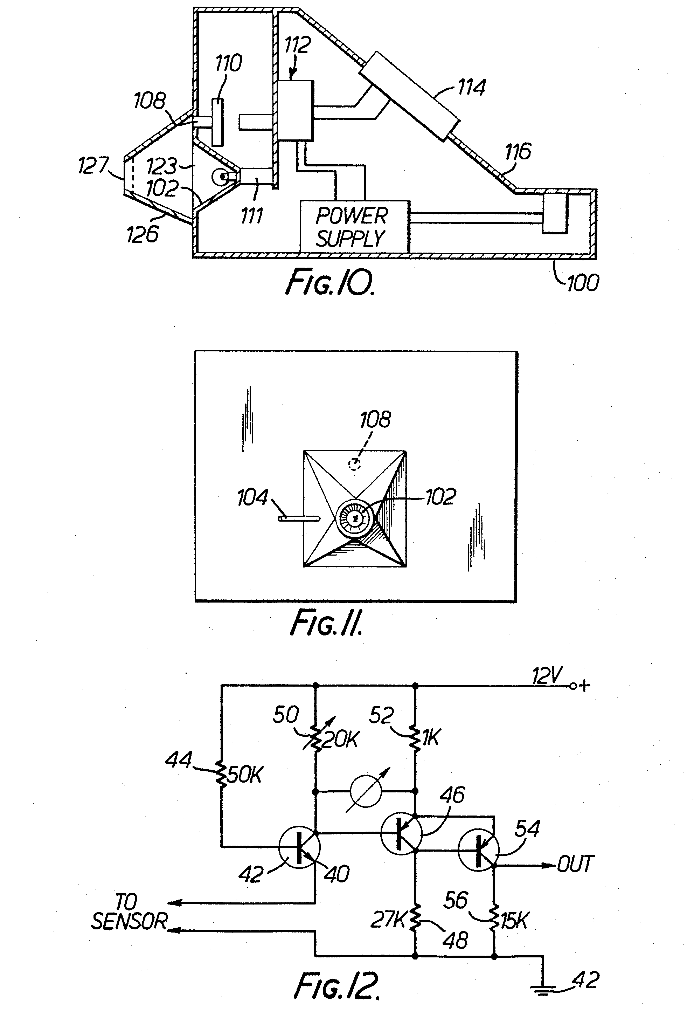

The embodiment of a spectrophotometric or densitometer apparatus as illustrated in Figures 10 and 11
represents a practical commercial adaptation of a portable,
easily calibrated, and yet fairly accurate, spectrophotometric or densitometer apparatus which is a modification
of the embodiment shown in Figure 9a. The same reference
numerals will therefore be used for like parts.

As illustrated in Figure 10, housing 100 includes
light source 102 having wide band output characteristics
and e.g. a 3000 Deg. colour temperature which is mounted
such that the light radiating therefrom is transmitted
through an aperture 123 at the opposite end of the housing.
The light emanating from light source 102 is reflected
through hood 126 and passes through aperture 127 at the
end of hood 126 and is reflected from a specimen or
calibration material 104 which is hand-held over aperture
127. The reflected light is passed through filter
system 110 and is then received by photosensor 112 with
the output thereof being indicated by indicating meter 114 mounted on sloping front surface 116 of housing 100. Housing 100 may also include a power supply and any other electronics that are necessary to respectively power the detection circuitry and to provide a suitable output, for example, to a computer. Such electronics may include amplifiers, frequency discriminator networks, and electrical frequency filters.

The portable spectrophotometric or densitometer apparatus of the embodiment in Figure 10 operates by the operator holding the specimen in front of aperture 127 such that light reflected from the specimen enters aperture 108 and impinges on monochromatic filter system 110. The spectrophotometric apparatus can be calibrated from the calibration material held over aperture 127. The spectrophotometric or densitometer apparatus of Figure 10, in addition to being portable, provides a simple and inexpensive means for readily determining the spectrophotometric characteristics of any number of specimens and is useful in laboratories and medical facilities, such as hospitals in which it may be desirable to quickly determine the content of a blood sample, for example. Such an instrument can be carried by a medical team in an ambulance.

Figure 11 represents a rear view of the photometric apparatus of Figure 10 illustrating the mounting of hood 126. The front view of the spectrophotometric or densitometer apparatus of the embodiment of Figure 10 is identical to that of the embodiment of Figure 9a and will not be described further.

Figure 12 illustrates a preferred embodiment of a measuring circuit which receives the output of the photosensor to actuate indicating meter 114. The output from the sensor is input to the emitter between the emitter 140 and ground 142. The base of transistor 142 is connected to a +12 volt power source through resistor 144 and the collector of transistor 142 is connected to the base of transistor 146, the emitter of which is connected to ground through resistor 148. Indicating meter 114 is connected from the collector of transistor 142 to the emitter of transistor 146. Additionally, the collector of transistor 142 is connected to the +12 volt power supply through resistor 150 and the emitter of transistor 146 is connected to the +12 volt power source through resistor 152. Thus, the meter is connected across the differential output from the collector of transistor 142 and the emitter of transistor 146. An external output signal can be provided from the emitter of the collector of transistor 154, the emitter of which is connected to the emitter of transistor 146, the base of which is connected to the collector of transistor 146 and the emitter of which is connected to ground through resistor 156. The output from the collector of transistor 154 can be utilized as an input to the computer or external recording circuitry.

CLAIMS:

1.      Apparatus for detecting spectrophotometric
characteristics of a specimen, comprising:
        a light source (40) for emitting a wide band of
radiation and mounted within a housing (42, 100);
        means (46, 48, 110) for producing monochromatic
light from light reflected from a specimen (45) outside
said housing (42, 100), and
        photosensitive detector means (50, 112) mounted
within said housing and responsive to the monochromatic
light reflected from such specimen (45) to provide output signals representative of the spectrophotometric
characteristics of said specimen (45).

2.      Apparatus as claimed in claim 1 wherein said means
for producing monochromatic light (46, 48, 110) includes
a plurality of monochromatic filters (64, 66, 68) each
having respectively different transmittance characteristics
over a different range of the light spectrum.

3.      Apparatus as claimed in claim 2 wherein said
plurality of monochromatic filters (64, 66, 68) is a
rotatable filter wheel having individual distinct filter
means (64a, 66a, 68a) thereon, each filter means filtering
a distinct and relatively narrow band of the light spectra
and further including a rotatable scanning wheel (46) with
a slit therein positioned in spaced relation to said filter
wheel (48) with said slit intercepting the light reflected
from said specimen (45) to provide a pulse train output to
said photosensitive detector means (50).

4.      Apparatus as claimed in claim 2 or 3 wherein said
housing includes a first aperture for emitting light from
said light source to the exterior of said housing and a second aperture (108) for receiving light reflected from said specimen, said monochromatic filters (110) being mounted in confronting relationship to said second aperture (108), and said photosensitive detector means (112) being mounted within said housing to receive the light transmitted through said monochromatic filters (110).

5.     Apparatus as claimed in claim 4 further comprising a calibration rod (104) extending from said housing to said first and second apertures and including an end portion thereof (106) for retaining a substance having a known spectrophotometric characteristic for calibrating said photosensitive detector means (112).

6.     Apparatus as claimed in any one of the preceding claims, and comprising a hood member (126) including an aperture (127) mounted on said housing (100) such that light can be reflected from said specimen positioned in front of said aperture.

7.     Apparatus as claimed in any one of the preceding claims and further comprising indicating means responsive to the output signals of said photosensitive detector means for indicating the spectrophotometric characteristics of the specimen.

0134321

FIG.1.

FIG.2.

FIG.3.

2/5

FIG.4.

FIG.5.

FIG.6.

0134321

*Fig. 7.*

PER CENT TRANSMITTANCY

WAVE LENGTH (mμ)

*Fig. 8.*

Fig. 9a.

Fig. 9b.

Fig. 9c.

0134321

*Fig. 10.*

*Fig. 11.*

*Fig. 12.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-A-2 910 240 (R. BARTKE) <br> * Claim 1; page 4, line 13 - page 5, line 10; page 7, lines 8-18; figures 1, 2 * | 1,2,7 | G 01 N 21/55 |
| Y | US-A-4 352 017 (M.T. DUFFY et al.) <br> * Claim 1; abstract; column 5, line 67 - column 6, line 16; figure 1 * | 1,2,7 | |
| A | EP-A-0 039 533 (STICHTING INSTITUUT VOOR GRAFISCHE TECHNIEK TNO) <br> * Claim 1; abstract; page 2, line 31 - page 3; figure * | 1,2,4 | |
| A | DE-U-7 730 629 (RUHRKOHLE AG) <br> * Claim 1; figure * | 1,6,7 | TECHNICAL FIELDS SEARCHED (Int. Cl. 3) <br><br> G 01 J 3/00 <br> G 01 N 21/00 |
| A | DE-A-2 901 980 (GRAPHO METRONIC MESS- UND REGELTECHNIK GMBH & CO. KG) <br> * Claim 3; page 10, paragraph 3 - page 11, line 6; figure 2 * | 3 | |

The present search report has been drawn up for all claims

| Place of search <br> BERLIN | Date of completion of the search <br> 06-03-1984 | Examiner <br> HOFMANN D G |
|---|---|---|